# EUROPEAN PATENT APPLICATION

(11) **EP 1 992 826 A1**
(43) Date of publication of application: **19.11.2008**
(21) Application number: 08103466.2
(22) Date of filing: 09.04.2008
(51) Int. Cl.: F16B 7/02, A47B 57/26, A47B 57/34, A47B 57/54

(54) **Easily assembled and detached tube connecting assembly**

(30) Priority: 16.05.2007 TW 96207867 U
(71) Applicant: Chiang, Ching-Hui, Changhua City (TW)
(72) Inventor: Chiang, Ching-Hui, Changhua City (TW)
(74) Representative: Hellmich, Wolfgang

(57) **Abstract**

A tube connecting assembly comprises at least one first tube (10); a plurality of inner liners (20); a periphery of each inner liner having a tapered shape; an inner periphery of each inner liner being formed with a convex portion; each inner liner enclosing a periphery of the first tube; at least one connecting structure (30) each being formed by an assembly unit (31) and a tightening unit (32); the assembly unit assembled to an periphery of the first tube; the tightening unit being formed by a first tightening unit (321), a second tightening unit (322) and a locking unit (323); each of the first tightening unit and second tightening unit has a respective inclined surface (3211,3221); at least one second tube (33) enclosing the tightening unit; by screwing the locking unit, the first tightening unit and second tightening unit will engage the second tube at different locations. The tube connecting assembly can be assembled and detached easily and conveniently.

## Description

The present invention relates to tubes, and particularly to a tube connecting assembly, which can be assembled and detached easily and conveniently so that the user can assembly the tube connecting assembly by himself or herself. The present invention has a referred tightness without falling out by external force.

In the prior art cartridge, a plate has slots at a bottom surface thereof and another plate has holes at a lateral side thereof. Then screws are used to lock the two plates.

The prior art assembly is easy, but many problems occur in the assembly.

When screws are used to lock the plates, because the slots at the bottom of the plate are as guided holes. The user must take a great force for locking the screw to the slots. In the locking place, the pressure applied to the screw is not uniform so that the screw will shift and thus after assembly, the cartridge is not stable and reduce some problem in assembly.

Accordingly, the primary object of the present invention is to provide a tube connecting assembly, which can be assembled and detached easily and conveniently so that the user can assembly the tube connecting assembly by himself or herself.

The present invention has a referred tightness without falling out by external force.

Moreover, the components of the present invention are detachable and have a preferred structure, which occupies a small space.

To achieve above objects, the present invention provides a tube connecting assembly comprising the following elements:
At least one first tube is a hollow tube; a periphery of each tube being installed with a plurality of parallel annular grooves;
A plurality of inner liners is included; a periphery of each inner liner having a tapered shape; and an inner periphery of each inner liner being formed with a convex portion. Each inner liner encloses a periphery of the first tube so that the convex portion is positioned to the annular groove;
At least one connecting structure each is formed by an assembly unit and a locking unit;
An assembly unit has a penetrating hole; the assembly unit assembled to an periphery of the first tube; the assembly unit having a plurality of screw holes arranged around a radial periphery thereof;

The tightening unit is formed by a first tightening unit, a second tightening unit and a locking unit. One side of the first tightening unit facing to the second tightening unit has an inclined surface; and one side of the second tightening unit facing to the first tightening unit has an inclined surface. The first tightening unit has a penetrating hole passing a center thereof and the second tightening unit has a penetrating hole passing a center thereof. The locking unit passes through the penetrating holes of the first tightening unit and second tightening unit and then to the screw hole of the assembly unit.

At least one second tube encloses the tightening unit; by screwing the locking unit, the first tightening unit and second tightening unit will engage at different orientations.

The first tube is a hollow tube with a plurality of joints.

Each inner liner includes a first sheet and a second sheet which has cambered shapes. A periphery of the inner liner has a tapered shape. An interior of the inner liner is formed with a convex portion. One side of the first sheet is protruded with two ribs which are installed at two opposite sides. The second sheet has a convex portion corresponding to the convex portions of the first sheet. The second sheet having two notches corresponding to the two ribs of the first sheet. The first sheet and second sheet enclosing a periphery of the first tube of the inner liner; and the ribs of the first sheet are buckled to the two notches of the second sheet.

The assembly unit has a spherical shape.

The penetrating hole of the assembly unit has a tapered shape with a great upper portion and a small lower portion.

The tightening unit further has an elastic unit; and the elastic unit is installed at a lateral side of the tightening unit and the periphery of the assembly unit.

Each of two ends of the locking unit of the tightening unit has one of a straight slot, a cruciform slot, a hexagonal slot, and a polygonal slot.

A center of the locking unit has a penetrating hole.

The elastic unit is a spring.

The elastic unit is a round elastic sheet; one side of the elastic sheet has a concave cambered surface which resists against a lateral side of the first tightening unit.

The elastic unit is a cruciform elastic sheet.

The various objects and advantages of the present invention will be more readily understood from the following detailed description when read in conjunction with the appended drawing.
Fig. 1 is an exploded schematic view of the present invention.
Fig. 2 is a partial schematic cross sectional view of the present invention.
Fig. 3 is an exploded perspective view of the present invention before assembly.

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

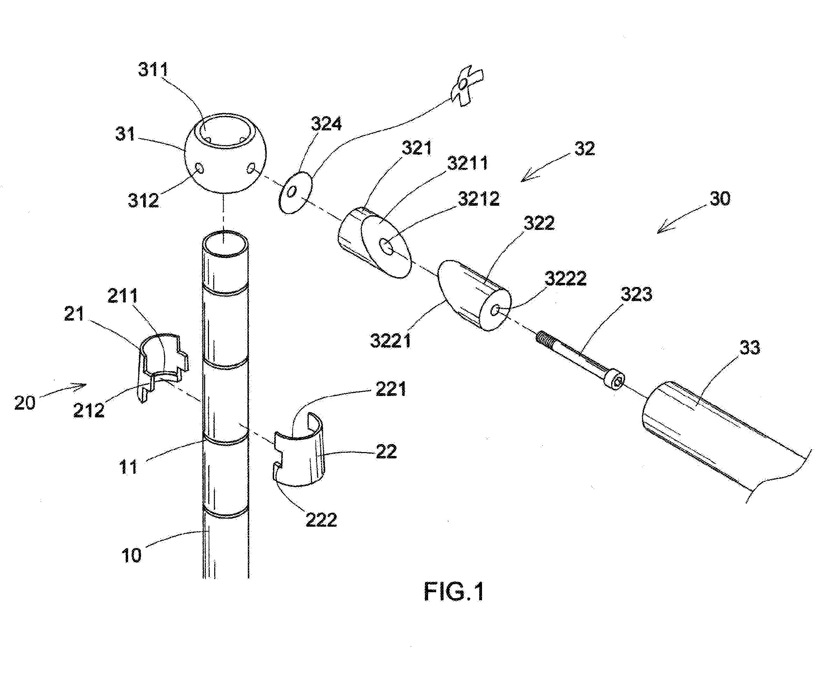

Referring to Figs. 1 to 3, the tube connecting assembly of the present invention is illustrated.

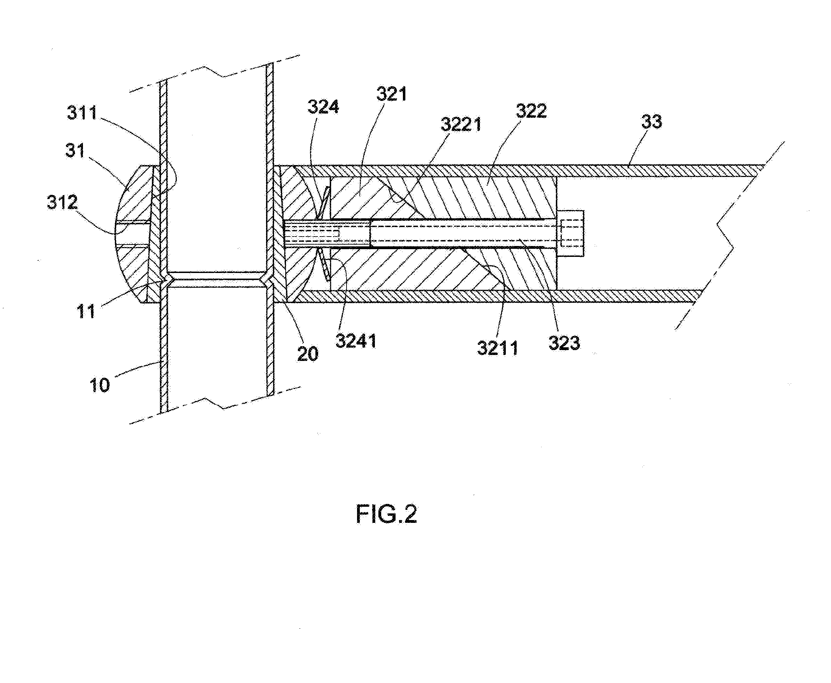

At least one first tube 10 each is a hollow tube. A periphery of each tube is installed with a plurality of parallel annular grooves (referring to Fig. 2).

A plurality of inner liners 20 each inner liner 20 includes a first sheet 21 and a second sheet 22 which has cambered shapes. A periphery of the inner liner 20 has a tapered shape. An interior of the inner liner 20 is formed with a convex portion 211. One side of the first sheet 21 is protruded with two ribs 212 which are installed at two opposite sides. The second sheet 22 has a convex portion (not shown) corresponding to the convex portions 211 of the first sheet 21. The second sheet 22 has two notches 222 corresponding to the two ribs 212 of the first sheet 21. The first sheet 21 and second sheet 22 encloses a periphery of the first tube 10 of the inner liner 20. The ribs 212 of the first sheet 21 are buckled to the two notches 222 of the second sheet 22 (referring to Fig. 2).

At least one connecting structure 30 each is formed by an assembly unit 31 and a tightening unit 32 (referring to Fig. 1).

The assembly unit 31 has an approximate sphere shape. A center of the assembly unit 31 has a tapered penetrating hole 311 has a small upper side and a larger upper side. The assembly unit 31 assembled to an periphery of the first tube 20. The assembly unit 31 has a plurality of screw holes (referring to Fig. 2) arranged around a radial periphery thereof.

The tightening unit 32 is formed by a first tightening unit 321, a second tightening unit 322 and a locking unit 323. One side of the first tightening unit 321 facing to the second tightening unit 322 has an inclined surface 3211. One side of the second tightening unit 322 facing to the first tightening unit 321 has an inclined surface 3221. The first tightening unit 321 has a penetrating hole 3212 passing a center thereof and the second tightening unit 322 has a penetrating hole 3222 passing a center thereof. The locking unit 323 passes through the penetrating holes of the first tightening unit 321 and second tightening unit 322 and then to the screw hole 312 of the assembly unit 31.

At least one second tube 33 encloses the tightening unit 32. By screwing the locking unit 323, the first tightening unit 321 and second tightening unit 322 will engage at different orientations (referring to Figs. 1 and 2).

The tightening unit 32 further has an elastic unit 324. The elastic unit 324 is installed at a lateral side of the tightening unit 32 and the periphery of the assembly unit 31.

A center of the locking unit 323 has a penetrating hole (not numbered) for passing through an electric wire.

In the present invention, the elastic unit 324 may be a spring.

In the present invention, the elastic unit 324 may be a round elastic sheet. One side of the elastic sheet has a concave cambered surface 3241 which resists against a lateral side of the first tightening unit 321 (referring to Fig. 2).

In the present invention, the elastic unit 324 is a cruciform elastic sheet.

In the present invention, each of two ends of the locking unit 323 of the tightening unit 32 has a straight slot, a cruciform slot, a hexagonal slot, or a polygonal slot, etc.

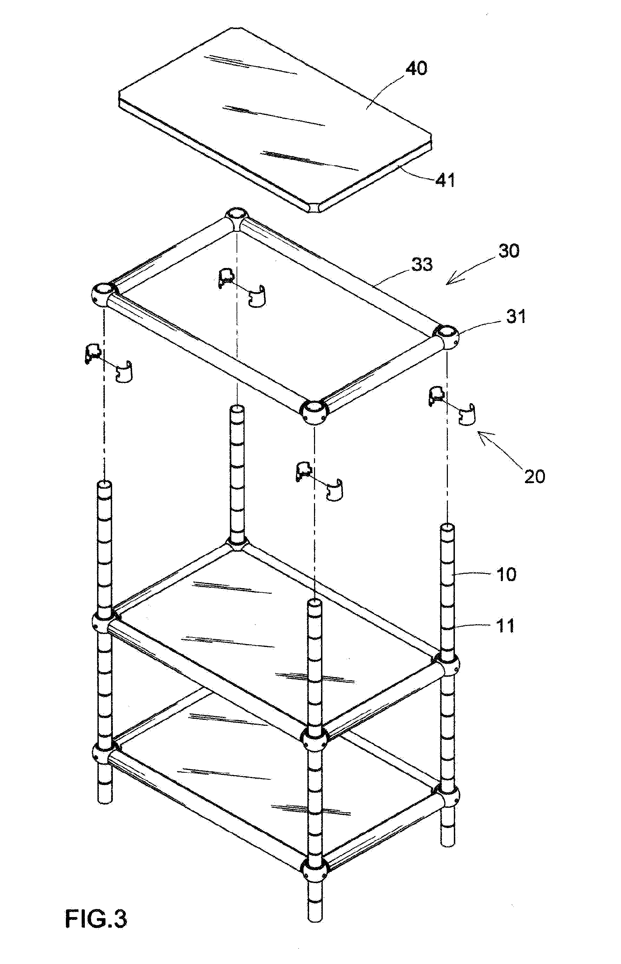

The present invention further has a plate sheet 40 which is made of metal, wood, plastic or glass. The plate sheet 40 is positioned to an interior of the connecting structure 30 (referring to Fig. 3).

Referring to Figs. 1 to 3, the assembly of the present invention is illustrated. The first sheet 21 and second sheet 22 enclose respective the periphery of the first tube 10 so that the convex portions of the first sheet 21 and second sheet 22 buckle to the annular groove 11 of the first tube 10 and the ribs 212 of the first sheet 21 are engaged to the notches 222 of the second sheet 22 (referring to Fig. 2).

Then, the locking unit 323 passes through the penetrating holes 3212, 3222 of the first tightening unit 321 and the second tightening unit 322 and then is locked to the screw hole 312 of the assembly unit 31. The assembly unit 31 is engaged to the second tube 33 (referring to Fig. 2). Thus, when the user screws the locking unit 323, the first tightening unit 321 will rotate with respect to the second tightening unit 322 so that the inclined surface 3211 is shifted from the inclined surface 3221. Thus, the inner periphery of the second tube 33 is tightened. The assembly work is convenient and easily. Furthermore, in the present invention, since the tightening unit 32 of the assembly unit 31 has an elastic unit 324 and two ends of the elastic unit 324 resist against one side of the first tightening unit 321 and an edge of the assembly unit 31 so that the first tightening unit 321 and second tightening unit 322 are tightly installed in the second tube 33. Then the second tube 33 is pulled toward the assembly unit 31 so that no gap is formed between the second tube 33 and the assembly unit 31. Thus a preferred stable structure is got.

Then, the penetrating hole 311 of the assembly unit 31 of the connecting structure 30 encloses the inner liner 20 so that the tapered inner liner 20 passes through the penetrating hole 311 of the assembly unit 31 (referring to Fig. 2 and Fig. 3) to have a firm structure.

Finally, the plate 40 is installed in the connecting structure 30 so that each concave cambered portion 41 of the plate 40 encloses the second tube 33. The assembly of the present invention is easy and simple and thus it can be performed rapidly and effectively.

Referring to Fig. 3, a second layer frame structure can be installed as desired so as to form an object receiving frame. The assembly work is easy.

Referring to Figs. 1 and 2, it is known that in the present invention, by using the locking unit 323, the inclined surface 3211 and inclined surface 3221 of the first tightening unit 321 and second tightening unit 322 are engaged at different orientations, so that the first tightening unit 321 and second tightening unit 322 can be expanded to tightly resist against an inner wall of the second tightening unit 322 (referring to Fig. 2). Thus a firm and stable structure is formed without being detached by external forces.

Moreover, the present invention can be detached easily and conveniently by user himself (or herself). Thus in storage or transfer, the elements of the present invention can be detached so that it only occupies a smaller space.

## Claims

1. A tube connecting assembly, comprising:
at least one first tube being a hollow tube; a periphery of each tube being installed with a plurality of parallel annular grooves;
a plurality of inner liners; a periphery of each inner liner having a tapered shape; an inner periphery of each inner liner being formed with a convex portion; each inner liner enclosing a periphery of the first tube so that the convex portion is positioned to the annular groove;
at least one connecting structure each being formed by an assembly unit and a tightening unit;
a center of the assembly unit having a penetrating hole; the assembly unit assembled to an periphery of the first tube; the assembly unit having a plurality of screw holes arranged around a radial periphery thereof;
the tightening unit being formed by a first tightening unit, a second tightening unit and a locking unit; one side of the first tightening unit facing to the second tightening unit having an inclined surface; one side of the second tightening unit facing to the first tightening unit having an inclined surface; the first tightening unit having a penetrating hole passing a center thereof and the second tightening unit having a penetrating hole passing a center thereof; the locking unit passing through the penetrating holes of the first tightening unit and second tightening unit and then to the screw hole of the assembly unit;
at least one second tube enclosing the tightening unit; by screwing the locking unit, the first tightening unit and second tightening unit will engage at different orientations.

2. The tube connecting assembly as claimed in claim 1, wherein the first tube is a hollow tube with a plurality of joints.

3. The tube connecting assembly as claimed in claim 1 or 2, wherein each inner liner includes a first sheet and a second sheet which has cambered shapes; a periphery of the inner liner has a tapered shape; an interior of the inner liner is formed with a convex portion; one side of the first sheet is protruded with two ribs which are installed at two opposite sides; the second sheet has a convex portion corresponding to the convex portions of the first sheet; the second sheet having two notches corresponding to the two ribs of the first sheet; the first sheet and second sheet enclosing a periphery of the first tube of the inner liner; and the ribs of the first sheet are buckled to the two notches of the second sheet.

4. The tube connecting assembly as claimed in one of claims 1 to 3, wherein the assembly unit has a spherical shape.

5. The tube connecting assembly as claimed in one of claims 1 to 4, wherein the penetrating hole of the assembly unit has a tapered shape with a great upper portion and a small lower portion.

6. The tube connecting assembly as claimed in one of claims 1 to 5, wherein the tightening unit further has an elastic unit; the elastic unit is installed at a lateral side of the tightening unit and the periphery of the assembly unit.

7. The tube connecting assembly as claimed in one of claims 1 to 6, wherein each of two ends of the locking unit of the tightening unit has one of a straight slot, a cruciform slot, a hexagonal slot, and a polygonal slot.

8. The tube connecting assembly as claimed in one of claims 1 to 7, wherein a center of the locking unit has a penetrating hole.

9. The tube connecting assembly as claimed in claim 6 or one of claims 7 and 8 referring to claim 6, wherein the elastic unit is a spring.

10. The tube connecting assembly as claimed in claim 6 or 9 or one of claims 7 and 8 referring to claim 6, wherein the elastic unit is a round elastic sheet; one side of the elastic sheet has a concave cambered surface which resists against a lateral side of the first tightening unit.

11. The tube connecting assembly as claimed in one of claims 6, 9 or 10 or one of claims 7 and 8 referring to claim 6, wherein the elastic unit is a cruciform elastic sheet.
